# EUROPEAN PATENT APPLICATION

(11) **EP 4 086 651 A1**
(43) Date of publication of application: **09.11.2022**
(21) Application number: 21172480.2
(22) Date of filing: 06.05.2021
(51) Int. Cl.: G01S 3/04

(54) **DIRECTION FINDING SYSTEM AND METHOD FOR RECEIVING A SIGNAL OF A PARTICIPANT, UNMANNED AERIAL VEHICLE LOCALIZATION SYSTEM AS WELL AS MOBILE NETWORK TESTING SYSTEM**

(71) Applicant: Rohde & Schwarz GmbH & Co. KG, 81671 München (DE)
(72) Inventor: Guezelarslan, Baris, 85521 Ottobrunn (DE)
(74) Representative: Prinz & Partner mbB

(57) **Abstract**

The invention relates to a direction finding system (10) for receiving a signal of a participant (12). The direction finding system (10) comprises at least one direction finder unit (20), at least one direction finding antenna (22) connected with the at least one direction finder unit (20), and at least one protocol decoder unit (24) connected with the at least one direction finder unit (20) and/or the at least one direction finding antenna (22). The at least one protocol decoder unit (24) is configured to decode non-encrypted messages from a base station (16), thereby obtaining information about a resource grid associated with the base station (16). The at least one protocol decoder unit (24) is configured to communicate the information about the resource grid to the at least one direction finder unit (20) and/or the at least one direction finding antenna (22). The information is used for synchronizing the at least one direction finder unit (20) and/or the at least one direction finding antenna (22) to the resource grid such that a signal from at least one certain participant (12) is selectively received. The at least one direction finder unit (20) is configured to determine a bearing of the respective participant (12) selected. Moreover, a method, an unmanned aerial vehicle localization system and a mobile network testing system are described.

## Description

The invention relates to a direction finding system for receiving a signal of a participant. Further, the invention relates to an unmanned aerial vehicle localization system for localizing an unmanned aerial vehicle in an air space supervised. Moreover, the invention relates to a mobile network testing system for testing a participant of a mobile network. In addition, the invention relates to a method of receiving a signal pf a participant.

In the state of the art, direction finding systems are known that are used for monitoring an area to be supervised in order to identify signal emitters that are not permitted to be present in the respective area supervised. In fact, the direction finding systems are used to receive signals emitted by the respective signal emitter while determining the direction of the signal emission, particularly by means of its bearing determined.

Moreover, the direction finding systems may also be used to localize the respective signal source that emits the signal received such that an operator of the direction finding system is enabled to localize the signal source such that the operator may deactivate the signal source if necessary, for instance in case of any occurring disturbance.

In modern telecommunication networks, for instance 4G, 4.5G, 5G or rather 5G-NR networks, it is however complicated to localize the respective participants of the network in an efficient manner due to the large frequency range used by those modern telecommunication standards as well as the respective resource allocation associated with the modern telecommunication standards. In fact, a certain participant uses different physical resource blocks (PRBs) when communicating with a base station. Thus, the respective signal emitter, namely the participant, changes its frequency used in a fast manner. Depending on the standard or rather protocol used, a physical resource block (PRB) may span 12 subcarriers. Moreover, a physical resource block may span 12 subcarriers over 7 Orthogonal Frequency-Division Multiplexing symbols (OFDM symbols), resulting in total 12 x 7 = 84 Resource Elements (REs). Generally, a resource element corresponds to one subcarrier in one OFDM symbol.

Obviously, the respective varying allocation with regard to the different resource elements (Res) makes it difficult to perform the direction finding by means of techniques known in the state of the art.

Accordingly, there is need for a direction finding system as well as a method which enables to efficiently perform a direction finding of a participant in a modern telecommunication network.

The invention provides a direction finding system for receiving a signal of a participant, particularly a participant of a modern telecommunication network such as 4G, 4.5G, 5G or rather 5G-NR. The direction finding system comprises at least one direction finder unit, for instance a receiver. Further, the direction finding system has at least one direction finding antenna connected with the at least direction finder unit. In addition, the direction finding system has at least one protocol decoder unit that is connected with the at least one direction finder unit and/or the at least one direction finding antenna. The at least one protocol decoder unit is configured to decode non-encrypted messages from a base station, thereby obtaining information about a resource grid associated with the base station. The at least one decoder unit is further configured to communicate the information about the resource grid to the at least one direction finder unit and/or the at least one direction finding antenna. The information is used for synchronizing the at least one direction finder unit and/or the at least one direction finding antenna to the resource grid such that a signal from at least one certain participant is selectively received. The at least one direction finder unit is configured to determine a bearing of the respective participant selected.

Further, the invention provides a method of receiving a signal of a participant. The method comprises the steps of:
- Decoding non-encrypted messages from the base station by means of a protocol decoder unit, thereby obtaining information about a resource grid associated with the base station,
- Communicating the information about the resource grid to at least one direction finder unit and/or at least one direction finding antenna, wherein the information is used for synchronizing the at least one direction finder unit and/or the at least one direction finding antenna to the resource grid such that a signal from at least one certain participant is selectively received, and
- Determining a bearing of the respective participant selected by means of the at least one direction finder unit.

The invention is based on the finding that a participant of the mobile network, for instance a 4G, 4.5G, 5G or rather 5G-NR network, can be identified in an efficient manner while using the at least protocol decoder unit additionally. In fact, the protocol decoder unit is configured to obtain information about the resource grid used by the base station that communicates with the respective participant(s) of the network, thereby gathering information concerning the individual resource elements (REs) associated with the communication, e.g. the communication channel. Depending on the respective channel bandwidth, a different number of physical resource blocks (PRBs) and a different number of subcarriers may be used.

Generally, the at least one protocol decoder unit can be used to identify the physical resource blocks, the respective subcarriers as well as their allocation with regard to the sub-frames and slots of a certain radio frame of the communication standard used by the network to which the respective participant belongs.

Accordingly, the respective allocation of the resources, namely the allocation of the individual resource elements, can be identified by means of the direction finding system, particularly the protocol decoder unit that decodes non-encrypted messages received. The respective information gathered is used for selecting a certain of several participants of the network, as the respective participant is associated with dedicated resource elements in the resource grid. Afterwards, the bearing of the respective participant selected is determined by means of the direction finder unit, thereby obtaining information with regard to the relative orientation of the respective participant. In other words, a certain participant is selected, particularly depending on the respective information obtained concerning the allocation with regard to the resource grid, wherein the respective signal(s) emitted by the selected participant is received, namely selectively received. Then, the bearing of the participant selected is determined in order to obtain information about the relative orientation of the participant.

Accordingly, the information gathered by the at least one protocol decoder unit is used for synchronizing the components of the direction finding system in order to localize the participant in an appropriate manner, thereby ensuring that the direction finding is done in an efficient manner.

In general, the protocol decoder unit ensures that the individual resource allocations of the participants in the network can be resolved, thereby obtaining information concerning the allocation of the individual participants of the network.

Moreover, more than one participant, particularly the signals from these participants, may be selected such that the bearings of these participants are determined accordingly.

An aspect provides that the at least one decoder unit is configured to control the at least one direction finder unit and/or the at least one direction finding antenna when communicating the information about the resource grid. The protocol decoder unit may set the at least one direction finding antenna and/or the at least one direction finder unit, e.g. define a certain time slot and/or frequency range for receiving purposes, which may be derived from the information about the resource grid. In other words, the protocol decoder unit may prepare the respective component of the direction finding system for receiving the signal of the certain participant that has been selected, namely the participant allocated to a certain resource block and the resource grid identified by means of the protocol decoder unit.

Another aspect provides that the at least one protocol decoder unit is configured to evaluate a frequency band in order to identify several participants transmitting signals within the frequency band evaluated. The frequency band may relate to a certain channel used for communicating purposes. Thus, the frequency band may cover a bandwidth of the respective channel. As mentioned above, the at least one protocol decoder unit is used for identifying the several different physical resource blocks (PRBs) within the resource grid that are allocated to different participants of the network. The at least one protocol decoder unit receives information concerning the different participants without gathering any information concerning the (relative) orientation of these participants.

However, this information can be obtained by means of the direction finder unit that is used for gathering information concerning the (relative) orientation, namely the location and/or the direction, of the certain participant emitting the signal received.

The protocol decoder unit and the direction finder unit together are enabled to identify the (relative) orientation of the certain participant in the modern network, while (previously) gathering the information concerning the resource elements (REs) used by the respective participant.

In other words, the direction finding system is enabled to summarize equal bearings, namely equal (relative) orientations, while assigning these bearings to the same participant that may use different resource elements of the resource grid, e.g. due to any allocation hopping such as frequency hopping and/or time slotted channel hopping.

Particularly, the direction finding system is configured to assign the several participants to physical resource blocks of the resource grid by using the information obtained. The protocol decoder unit is enabled to obtain the information concerning the different resource elements and their respective allocation. In addition, the direction finder unit is enabled to identify the respective bearings of the signals received during the different resource elements.

In addition, the direction finding system may comprise a display module that is configured to visualize the direction of the signal received from the participant selected. Hence, a direction of the signal received from the participant selected is visualized. For instance, the direction of the signal received may be illustrated by a certain label indicating a cardinal direction like "North", "South East" or similar. Moreover, an arrow may be visualized for providing the information concerning the direction of the signal received. Alternatively, the direction of the signal received may be illustrated or rather visualized in a coded manner, for instance by means of a color coding such that different colors are used for indicating different (relative) orientations.

The display module may be used to visualize a power level and/or a spectrogram, e.g. frequency over time, of the signal(s) received, particularly by means of a waterfall chart or rather waterfall diagram.

For instance, only the signal(s) of the certain participant(s) selected are visualized.

Particularly, the display module is configured to visualize different participants identified in a different manner. The different participants may be identified by means of a certain coding, for instance a color coding. Therefore, the display module may be configured to output a resource grid with the individual resource elements, wherein individual resource elements used by the same participant are coded in a similar manner, for instance by means of the same color. The respective color chosen for the dedicated participant may depend on the direction of the signal received, thereby providing information concerning the resource elements used by the same participant as well as its (relative) orientation, particularly its direction, when illustrating the different resource elements of the resource grid in a coded manner, particularly a color-coded manner.

The direction finding system may comprise at least two further direction finder units and/or at least further direction finding antennas. In total, the direction finding system may comprise three direction finder units and/or three direction finding antennas associated with the direction finder units in an unambiguous manner. Hence, a triangulation process can be performed by means of the direction finding system in order to localize the certain participant of the network in an efficient and accurate manner. By means of the triangulation process, the exact location of the participant can be determined accurately rather than its (relative) orientation/direction. Hence, the participant selected may be localized.

Moreover, the direction finding system may comprise at least two further protocol decoder units. The decoder units may be directly associated with the direction finder units and/or the direction finding antennas in an unambiguous manner. Thus, the direction finding system may comprise three direction finder units, three direction finding antennas as well as three protocol decoder units.

A direction finder unit together with a direction finding antenna and a protocol decoder unit may establish an entity that can be located at a certain position whereas the other entities are located at different positions, thereby enabling an accurate triangulation process. In other words, the direction finding system may comprise three different entities in total, which are located at three different locations, thereby covering a certain area to be monitored.

In general, the direction finding system may comprise several direction finder units, wherein each of the several direction finder units is associated with a dedicated protocol decoder unit. Thus, each direction finder unit is located close to a dedicated protocol decoder unit, thereby ensuring that both components of the direction finding system are synchronized with each other in an appropriate manner.

The direction finding system may comprise a separately formed receiving antenna that is connected with the at least one protocol decoder unit. Thus, a different antenna may be used for receiving the non-encrypted messages from the base station. The receiving antenna may be connected with the protocol decoder unit exclusively.

In addition, the invention provides an unmanned aerial vehicle localization system for localizing an unmanned aerial vehicle in an airspace supervised. The unmanned aerial vehicle localization system comprises the direction finding system as described above. Hence, the direction finding system used in the unmanned aerial vehicle localization system can identify a certain unmanned aerial vehicle in the airspace supervised while indicating the respective resource elements of the resource grid that are used by the unmanned aerial vehicle when communicating with a base station. This information may be used for further processing or rather stopping the unmanned aerial vehicle if necessary. Particularly, the direction finding system is used for determining the location of the unmanned aerial vehicle by means of the triangulation process performed.

In addition, the invention provides a mobile network testing system for testing a user equipment to be used in a mobile network. The mobile network testing system comprises the direction finding system described above. Hence, the mobile network testing system can be used for testing the respective behavior of the user equipment, namely a participant of the mobile network, while verifying its transmission characteristics by means of the direction finding system. The mobile network testing system may also be used to test the characteristics of a certain mobile network while using the information gathered from the respective participant.

Generally, several of the bearings determined for certain signals selectively received may be equal due to the fact that those signals were emitted by the same participant of the network. This can be verified by taking the information about the resource grid into account such that equal bearings are merged and associated with a single participant based on the information obtained regarding the resource grid.

For instance, a color image may be generated that has at least two dimensions, in particular three dimensions. The color image has a plurality of pixels, wherein each pixel is associated with a set of hue (H) parameters, with a set of saturation (S) parameters and with a set of value (V) or rather lightness (L) parameters. The data to be visualized relates to data obtained from the respective signal received. The data to be visualized is assigned to level and azimuth and/or elevation. Hence, the data is represented in the color image by hue (H), saturation (S) and value (V) or rather lightness (L) of the respective pixels.

An operator may selectively assign hue (H), saturation (S) and/or value (V) or rather lightness (L) of the color image to level, azimuth and/or elevation of the data. For instance, hue (H), saturation (S) and/or value (V) or rather lightness (L) is set by using an operation member, e.g. a rotational button like a mechanical button or rather a graphically illustrated operation member on the display module being a touch-sensitive one.

Accordingly, the so-called HSV model or rather the so-called HSL model is applied for visualizing the respective data. The HSV model or rather the HSL model comprises inter alia the parameter hue assigned to an angular dimension in contrast to the RGB color model that is linear. Therefore, the HSV or rather HSL model corresponds to a circular color model that more closely aligns with the way human vision perceives color-making attributes. In fact, the colors of each hue used for illustration are arranged in a radial slice around a central axis that is assigned to neutral colors which ranges from black at the bottom to white at the top. Hence, the parameter hue typically starts at the red primary at 0° wherein it passes through the green primary at 120° and the blue primary at 240°. At an angle of 360°, the hue parameter gets back to red primary. Accordingly, the respective information to be visualized that is assigned to an angle, namely azimuth or elevation, may be represented in the color image by the hue parameter assigned to a circular scale. Thus, an intuitive assignment is provided.

Particularly, the information regarding azimuth is represented by the hue parameter since the azimuth is one of the most important information in direction finding.

Generally, the respective information to be visualized, namely level, azimuth and/or elevation, is represented in the color image by hue, saturation and/or value or rather hue, saturation and/or lightness depending on the respective color model used, namely the HSV model or rather the HSL model. Thus, at least two different kinds of information, particularly level and azimuth, can be illustrated by the color image in a combined manner.

In other words, a combined illustration of the respective data or rather information is possible wherein the information is assigned to dimensions of the color image as they correspond to the parameters of the color image, namely hue, saturation and value or rather lightness.

In fact, the data to be visualized may comprise two dimensions such as level and azimuth or rather level and elevation wherein the respective information is assigned to a dedicated dimension of the color image. The respective information or rather dimension may correspond to one of the parameters of the color model applied, namely hue, saturation and value or rather hue, saturation and lightness.

Moreover, the data to be visualized may comprise three dimensions, namely level, azimuth and elevation, wherein each dimension is associated to one specific parameter of the color model applied, namely hue, saturation and value or rather hue, saturation and lightness.

In general, the level corresponds to a magnitude or an amplitude of a signal assigned to the data to be visualized.

Accordingly, an operator of the direction finding system is informed about the different resource elements used by the same participant as well as the respective orientation, e.g. the direction, of the signal emitted by the participant selected and the level of the signal received from the participant selected.

The foregoing aspects and many of the attendant advantages of the claimed subject matter will become more readily appreciated as the same become better understood by reference to the following detailed description, when taken in conjunction with the accompanying drawings. In the drawings,
- Figure 1 schematically shows a direction finding system according to the invention,
- Figure 2 schematically shows an unmanned aerial vehicle localization system according to the invention, and
- Figure 3 schematically shows a mobile network testing system according to the invention,
- Figure 4 shows an overview with a visualization provided by a display module of the direction finding system according to the invention, and
- Figure 5 shows an overview how the visualization of Figure 4 is obtained.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

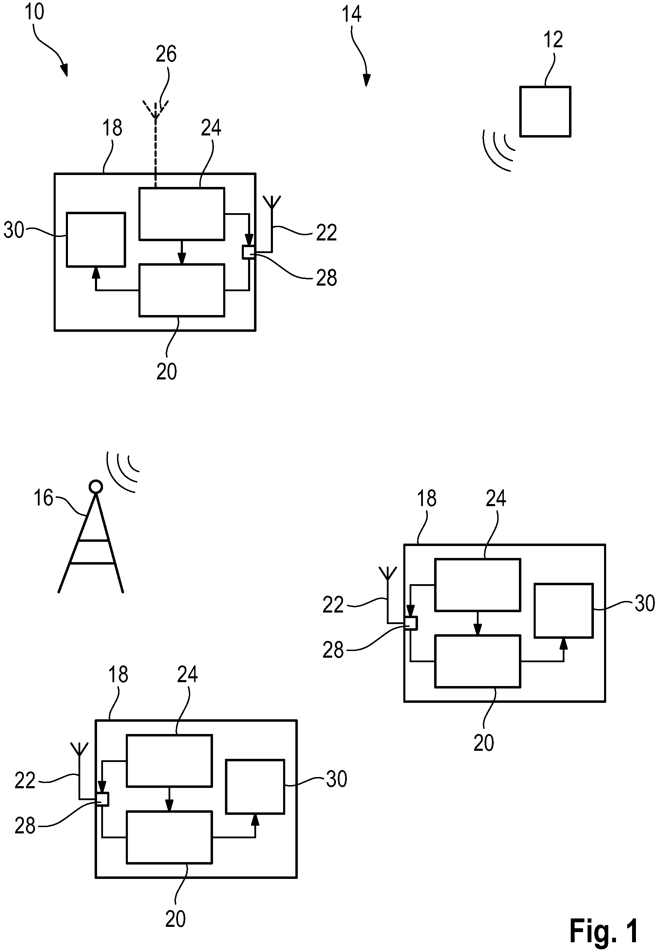

In Figure 1, a direction finding system 10 is shown that is used for receiving a signal of a participant 12 in a mobile network 14, for instance a modern mobile telecommunication network like 4G, 4.5G, 5G or rather 5G-NR.

The network 14 typically comprises at least one base station 16 that communicates with the respective participants 12, thereby exchanging messages and data. Thus, a bidirectional communication is established between the base station 16 and the participants 12 such that uplink messages and downlink messages are provided.

In the shown embodiment, the direction finding system 10 comprises three different entities 18 that are located at different positions, particularly with respect to the participant 12. However, the entities are established in a similar manner as will be described hereinafter.

Each entity 18 has a direction finder unit 20, also called receiver, which is connected with a direction finding antenna 22 that is used for receiving signals emitted by the participants 12 of the network 14. The respective direction finding antenna 22 converts the electromagnetic signals received over-the-air into electric signals that are forwarded to the direction finder unit 20 for analyzing purposes.

In addition, each of the entities 18 also comprises a protocol decoder unit 24, which is also called protocol tester. The protocol decoder unit 24 is connected with the direction finder unit 20 and/or the direction finding antenna 22, particularly of the same entity 18.

In the shown embodiment, the respective protocol decoder unit 24 is connected with both components of the dedicated entity 18 simultaneously, namely the direction finder unit 20 as well as the direction finding antenna 22.

In general, the protocol decoder unit 24 is configured to decode non-encrypted messages received from the base station 16 that communicates with the participant 12.

The non-encrypted messages may be received by the direction finding antenna 22 of the entity 18. Then, the direction finding antenna 22 forwards electric signals corresponding to the non-encrypted messages to the protocol decoder unit 24 such that the protocol decoder unit 24 is enabled to decode the respective messages in order to obtain information about a resource grid associated with the base station 16, namely information concerning the resource grid and its individual resource elements as well as the respective allocation of these resource elements.

Alternatively, the protocol decoder unit 24 is associated with a separately formed receiving antenna 26 as indicated by the dashed lines, which only communicates with the protocol decoder unit 24. Hence, the receiving antenna 26 is used for receiving the non-encrypted messages transmitted by the base station 16.

In any case, the respective protocol decoder unit 24 evaluates a frequency band in order to identify several participants 12 transmitting signals within the frequency band evaluated. Hence, the protocol decoder unit 24 is enabled to assign the different resource elements to the different participants 12 without knowing the respective specific participants 12.

The respective protocol decoder unit 24 further communicates the information obtained about the resource grid to the direction finder unit 20 and/or the direction finding antenna 22, particularly to a controlling port 28 with which the direction finding antenna 22 is connected.

Hence, a controlling of the direction finder unit 20 and/or the direction finding antenna 22 takes place when communicating the information about the resource grid.

In other words, the information is used for synchronizing the direction finder unit 20 and/or the direction finding antenna 22 to the resource grid such that a signal from a certain participant 12 can be selectively received.

Afterwards, the direction finder unit 20 may perform a direction finding process in order to determine a bearing of the respective participant 12 selected, e.g. the (relative) orientation of the participant 12.

When using the three different entities 18, namely their direction finder units 20, a triangulation process may take place such that the participant 12 can be localized.

The respective entities 18 also each comprise a display module 30 that is configured to visualize results obtained, particularly visualizing a direction of the signal received from the participant 12 selected.

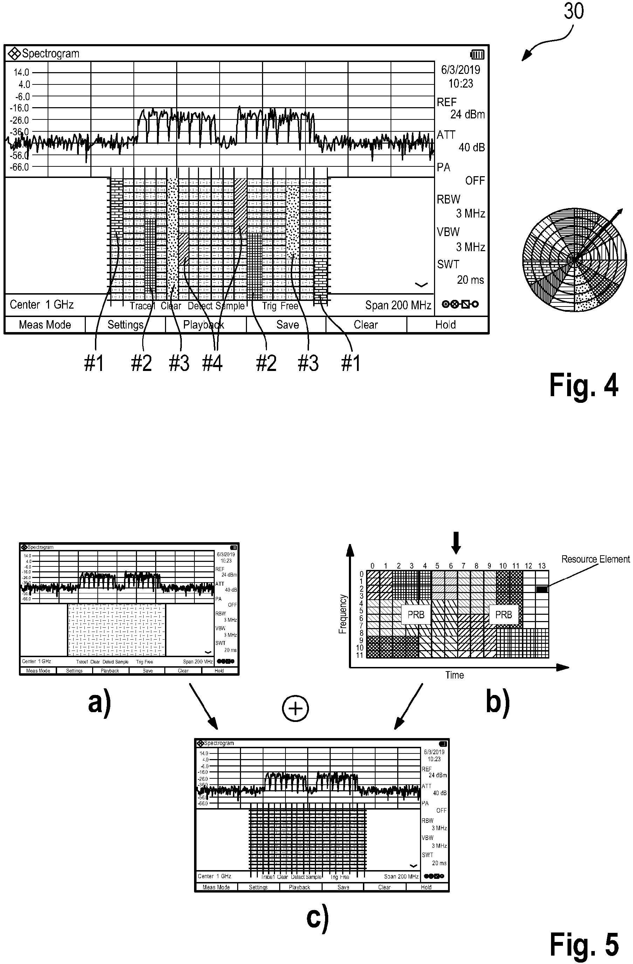

In Figure 4, a visualization provided by the display module 30 is illustrated.

As shown, the power of the signal(s) received as well as a spectrogram of the signal(s) received may be visualized together with the resource grid, wherein the information concerning the resource grid and the individual resource elements (REs) is obtained by the respective protocol decoder unit 24. In fact, the spectrogram is outputted by means of a waterfall chart or rather waterfall diagram.

Moreover, the allocation of the individual resource elements (REs) is illustrated in a coded manner, namely by means of a color coding. Resource elements (REs) allocated to the same participants 12 are coded in a similar manner, wherein the code chosen may depend on the information gathered concerning the bearing.

For instance, a certain color may be selected which depends on the orientation or rather direction of the signal received, wherein the color provides information concerning the direction and the level. In fact, the respective coding may be obtained by means of pixels, wherein each pixel is associated with a set of hue (H) parameters, with a set of saturation (S) parameters and with a set of value (V) or rather lightness (L) parameters. The data to be visualized relates to data obtained from the respective signal received. The data to be visualized is assigned to level and azimuth and/or elevation, namely level and orientation. Hence, the data is represented in the color image by hue (H), saturation (S) and value (V) or rather lightness (L) of the respective pixels.

The selection of the respective color of the color coding is schematically illustrated in Figure 4 as well.

In other words, the respective colors chosen for the different participants 12 may indicate the respective direction of the signals received such that an operator of the direction finding system 10 is informed about the different resource elements used by the same participant 12 as well as the respective direction of the signal emitted by the participant 12 and the level of the signal received.

The individual participants 12 identified are labeled by #1 to #4 additionally.

In Figure 5, the individual steps are shown for obtaining the visualization shown in Figure 4.

In fact, signal(s) are received by the direction finding system 10, particularly each of the entities 18. The level and the spectrogram of the signal(s) received may be determined as shown in the diagram a). This may be done by the receiver, namely the direction finder unit 20 without determining any bearing so far.

In addition, the direction finding system 10, particularly each of the entities 18, e.g. the respective protocol decoder units 24, process non-encrypted messages received from the base station 16 in order to obtain information concerning the resource grid used as shown in the diagram b). Hence, the respective allocations of the resource elements (REs) or rather the physical resource blocks (PRBs) can be determined.

Both information gathered may be merged as indicated by the "+" in order to obtain the information as visualized in diagram c). In fact, the spectrogram of diagram a) is enriched by the information obtained concerning the resource grid as shown in diagram b).

Afterwards, the bearing(s) are determined for the individual participants 12, particularly the selected ones, such that the resource elements within the resource grid displayed in the spectrogram are coded accordingly, e.g. by means of a color coding.

The color coding may additionally provide information concerning the orientation, particularly the direction, of the signal(s) received and/or the respective level of the signals received.

Hence, the direction finding system 10 assigns the several participants 12 to the physical resource blocks (PRBs), particularly the resource elements (REs), of the resource grid by using the information obtained.

Generally, the direction finding system 10 comprises in total three direction finder units 20 as well as three direction finding antennas 22 connected with the direction finder units 20. Therefore, a triangulation process can be performed by means of the direction finding system 10 in order to localize the participant 12 in an accurate manner.

In addition, the direction finding system 10 may also comprise three protocol decoder units 24 such that the direction finding system 10 has three protocol decoder units 24, wherein each direction finder unit 20 is associated with a dedicated protocol decoder unit 24. This ensures that the synchronization between the decoder units 24 and the associated direction finder unit 20 is ensured accordingly.

In general, a single entity 18, namely one direction finder unit 20, one direction finding antenna 22 and one protocol decoder unit 24, is sufficient even though the results obtained are less accurate. However, the direction finding system 10 is more cost-efficient due to the reduced number of components.

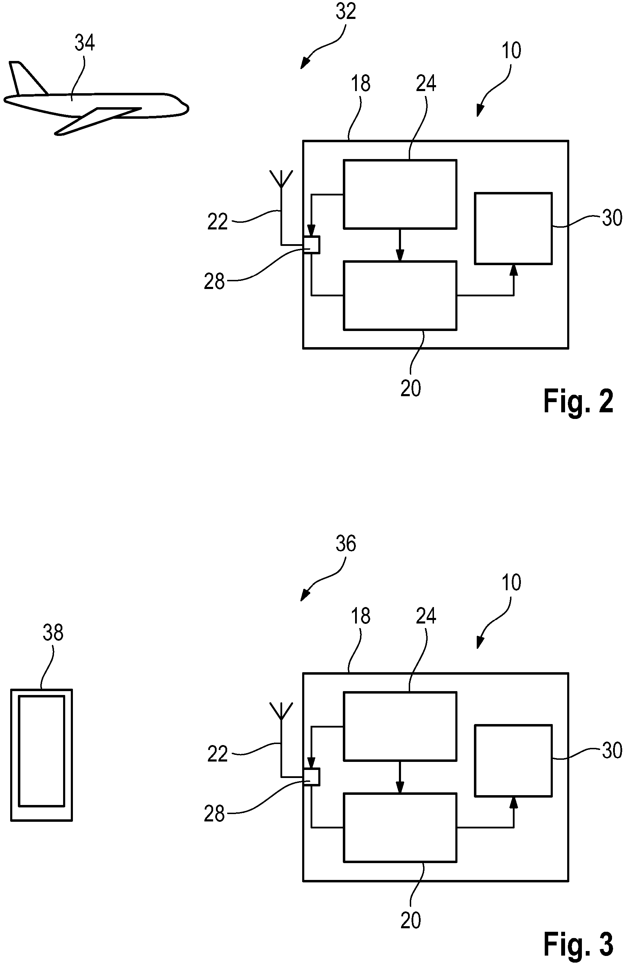

In Figure 2, a use case of the direction finding system 10 is shown, as it is integrated in an unmanned aerial vehicle localization system 32 is shown that is used for localizing an unmanned aerial vehicle 34 in an airspace supervised. The unmanned aerial vehicle localization system 32 comprises the direction finding system 10 as described above.

The direction finding system 10 of the unmanned aerial vehicle localization system 32 may also comprise more than one entity 18, e.g. three entities 18 for localizing purposes. Then, the unmanned aerial vehicle localization system 32 is enabled to localize the unmanned aerial vehicle 34 by using the information gathered by the protocol decoder unit 24 as well as the bearing information obtained from the respective direction finder unit 20.

In Figure 3, a mobile network testing system 36 is shown that is used for testing a user equipment 38 that may be used as a participant 12 of the mobile network 14.

The mobile network testing system 36 comprises the direction finding system 10 as described above.

The information gathered by the direction finding system 10 can be used for evaluating the characteristics and behavior of the user equipment 38 in an appropriate manner. Thus, the mobile network testing system 36 is enabled to test a respective participant 12.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A direction finding system for receiving a signal of a participant (12), wherein the direction finding system (10) comprises at least one direction finder unit (20), at least one direction finding antenna (22) connected with the at least one direction finder unit (20), and at least one protocol decoder unit (24) connected with the at least one direction finder unit (20) and/or the at least one direction finding antenna (22),
wherein the at least one protocol decoder unit (24) is configured to decode non-encrypted messages from a base station (16), thereby obtaining information about a resource grid associated with the base station (16),
wherein the at least one protocol decoder unit (24) is configured to communicate the information about the resource grid to the at least one direction finder unit (20) and/or the at least one direction finding antenna (22), wherein the information is used for synchronizing the at least one direction finder unit (20) and/or the at least one direction finding antenna (22) to the resource grid such that a signal from at least one certain participant (12) is selectively received, and
wherein the at least one direction finder unit (20) is configured to determine a bearing of the respective participant (12) selected.

2. The direction finding system according to claim 1, wherein the at least one protocol decoder unit (24) is configured to control the at least one direction finder unit (20) and/or the at least one direction finding antenna (22) when communicating the information about the resource grid.

3. The direction finding system according to claim 1 or 2, wherein the at least one protocol decoder unit (24) is configured to evaluate a frequency band in order to identify several participants (12) transmitting signals within the frequency band evaluated.

4. The direction finding system according to claim 3, wherein the direction finding system (10) is configured to assign the several participants (12) to physical resource blocks of the resource grid by using the information obtained.

5. The direction finding system according to any of the preceding claims, wherein the direction finding system (10) comprises a display module (30) that is configured to visualize a direction of the signal received from the participant (12) selected.

6. The direction finding system according to claim 5, wherein the display module (30) is configured to visualize different participants (12) identified in a different manner, particularly by means of a coding, for instance a color coding.

7. The direction finding system according to any of the preceding claims, wherein the direction finding system (10) comprises at least two further direction finder units (20) and/or at least two further direction finding antennas (22).

8. The direction finding system according to any of the preceding claims, wherein the direction finding system (10) comprises at least two further protocol decoder units (24).

9. The direction finding system according to any of the preceding claims, wherein the direction finding system (10) comprises several direction finder units (20), and wherein each of the several direction finder units (20) is associated with a dedicated protocol decoder unit (24).

10. The direction finding system according to any of the preceding claims, wherein the direction finding system (10) comprises a separately formed receiving antenna (26) that is connected with the at least one protocol decoder unit (24).

11. An unmanned aerial vehicle localization system for localizing an unmanned aerial vehicle (34) in an airspace supervised, wherein the unmanned aerial vehicle localization system (32) comprises the direction finding system (10) according to any of the preceding claims.

12. A mobile network testing system for testing a user equipment (38) to be used in a mobile network (14), wherein the mobile network testing system (36) comprises the direction finding system according to any of the claims 1 to 10.

13. A method of receiving a signal of a participant (12), wherein the method comprises the steps of:
- Decoding non-encrypted messages from a base station (16) by means of a protocol decoder unit (24), thereby obtaining information about a resource grid associated with the base station (16),
- Communicating the information about the resource grid to at least one direction finder unit (20) and/or at least one direction finding antenna (22), wherein the information is used for synchronizing the at least one direction finder unit (20) and/or the at least one direction finding antenna (22) to the resource grid such that a signal from at least one certain participant (12) is selectively received, and
- Determining a bearing of the respective participant (12) selected by means of the at least one direction finder unit (20).

14. The method according to claim 13, wherein a direction of the signal received from the participant (12) selected is visualized.

15. The method according to claim 13 or 14, wherein the participant (12) selected is localized.
